# FASCICULE DE BREVET EUROPEEN

(11) **EP 4 615 725 B1**
(45) Date de publication et mention de la délivrance du brevet: **26.08.2026**
(21) Numéro de dépôt: 23809274.6
(22) Date de dépôt: 12.10.2023
(51) Int. Cl.: B60R 16/02, H02G 5/00

(54) **ATTACHE COULISSANTE POUR BARRES OMNIBUS D'UN SYSTÈME DE BATTERIES DE VÉHICULE ÉLECTRIQUE ET VÉHICULE COMPORTANT UNE TELLE ATTACHE**
REISSVERSCHLUSS FÜR SAMMELSCHIENEN EINES BATTERIESYSTEMS EINES ELEKTROFAHRZEUGS UND FAHRZEUG MIT SOLCH EINEM VERSCHLUSS
SLIDING FASTENER FOR BUS BARS OF A BATTERY SYSTEM OF AN ELECTRIC VEHICLE AND VEHICLE COMPRISING SUCH A FASTENER

(30) Priorité: 08.11.2022 FR 2211592
(43) Date de publication de la demande: 17.09.2025
(73) Titulaire: Stellantis Auto SAS, 78300 Poissy (FR)
(72) Inventeur: DAUVIN, Eric, 93600 AULNAY SOUS BOIS (FR)
(74) Mandataire: PSIP
(86) Numéro de dépôt international: PCT/FR2023/051592
(87) Numéro de publication internationale: WO 2024/100334

(56) Documents cités:
- EP-B1- 2 783 439
- FR-A1- 3 076 100
- US-A1- 2021 184 197
- US-B2- 10 634 043
- US-B2- 9 160 155
- US-B2- 9 698 402

## Description

La présente invention revendique la priorité de la demande française N°2211592 déposée le 08.11.2022.

L'invention porte sur les systèmes de recharge présents dans les véhicules électriques ou hybrides électriques, et notamment ceux présentant d'une part un module de batterie et d'autre part une paire de conducteurs protégés par une gaine isolante, appelés barres omnibus, cheminant le long du module de batterie. L'invention porte en particulier sur un moyen de positionnement des barres omnibus contre un module de batterie que comporte un tel système de recharge. Un système pour le positionnement de conducteurs d'un système de recharge de véhicule électrique connu est décrit dans US2021184197A.

Dans une structure de système de recharge pour véhicule électrique connue comportant un module de batterie, un support métallique (servant à la fois à l'accrochage de câbles, à la protection d'un angle du module de batterie et à la fixation d'un calculateur électronique sur le module de batterie) et une paire de barres omnibus connectée électriquement au module de batterie, du ruban adhésif est utilisé pour plaquer de manière fixe en position les barres omnibus contre le support métallique. Le ruban adhésif résiste cependant mal dans le temps et tend notamment à se décoller face aux efforts auxquels les barres omnibus sont soumises au cours de l'utilisation du véhicule électrique. Les barres omnibus finissent alors par s'éloigner de la position qui leur est initialement assignée, faisant alors apparaître un risque d'interférence des barres omnibus avec leur environnement, et ainsi un risque de court-circuit électrique.

Un objectif de l'invention est de remédier à l'inefficacité du ruban adhésif à résister dans le temps.

Pour atteindre cet objectif, l'invention propose une attache pour le positionnement de conducteurs d'un système de recharge de véhicule électrique ou hybride électrique, comportant :
- une tête présentant au moins une surface plane ;
- une première jambe et une deuxième jambe, chacune de forme allongée, la première jambe s'étendant depuis la tête, la deuxième jambe étant rattachée à un ensemble formé par la tête et la première jambe, la première jambe comportant une première face et la deuxième jambe comportant une deuxième face agencée en regard de la première face,

la première jambe comportant un premier moyen d'arrêt saillant en direction de la deuxième jambe, et la deuxième jambe comportant un deuxième moyen d'arrêt saillant en direction de la première jambe, les moyens d'arrêt de la première jambe et de la deuxième jambe étant agencés en regard l'un par rapport à l'autre,
un logement de réception étant formé conjointement par la première jambe et la deuxième jambe entre la première face et la deuxième face, et délimité par lesdits moyens d'arrêt dans un sens opposé à la tête,
une longueur d'une section distale de la deuxième jambe qui s'étend au-delà du deuxième moyen d'arrêt, mesurée depuis le deuxième moyen d'arrêt, étant supérieure à une longueur du logement de réception mesurée entre le deuxième moyen d'arrêt et une surface de fond du logement de réception opposée au deuxième moyen d'arrêt.

Une telle attache peut être facilement mise en place et maintenue sur des barres omnibus d'un système de recharge de véhicule électrique ou hybride électrique. Avantageusement, l'attache selon l'invention permet de supprimer le ruban adhésif précédemment utilisé dans le positionnement de barres omnibus et de résoudre les problèmes de positionnement que le ruban adhésif générait. Le positionnement correct des barres omnibus l'une au-dessus de l'autre et positionnement de celles-ci, fixes, contre un support que comporte le système de recharge du véhicule. Grâce à ce positionnement fixe des barres omnibus, les frottements de celles-ci contre les composants environnants dans le véhicule sont également supprimés. L'arrachage et le déchirement de la gaine isolante des barres omnibus est ainsi évité, permettant de supprimer le risque de court-circuit.

En outre, l'invention améliore l'efficacité du montage des barres omnibus en réduisant le temps passé à les positionner. En effet, l'attache peut être mise en place très simplement en deux étapes : par encliquetage sur une paire de barres omnibus superposées puis par coulissement jusqu'à insertion à force de la tête de l'attache derrière un support (par exemple métallique) et/ou jusqu'à insertion à force d'une partie distale de l'une des jambes entre l'une des barres omnibus et un élément de plancher ou de châssis.

Avantageusement, selon l'invention, l'attache peut être en plastique chargé de fibres, de préférence de carbone ou de verre.

Avantageusement, selon l'invention, les moyens d'arrêt sont chacun en forme de dent à section triangulaire.

Avantageusement, selon l'invention, la tête et la première jambe peuvent être disposées dans l'alignement l'une de l'autre.

Avantageusement, selon l'invention, la deuxième jambe peut être plus longue que la première jambe et/ou le premier moyen d'arrêt peut être disposé en une extrémité distale de la première jambe.

Avantageusement, selon l'invention, la première jambe et au moins une section proximale de la deuxième jambe portant la deuxième face peuvent s'étendre dans un plan d'extension respectif, les plans d'extension étant sensiblement parallèles entre eux.

L'invention porte également sur un système de recharge pour véhicule électrique ou hybride électrique, comportant une attache telle que décrite ci-dessus et deux barres métalliques destinées à former chacune un conducteur de type barre omnibus, le logement de réception de l'attache étant apte à recevoir l'une des deux barres métalliques.

Avantageusement, le système de recharge de véhicule électrique ou hybride électrique peut comporter :
- un module de batterie ;
- un support métallique comportant une surface de contact plane orientée en regard du module de batterie lorsque le support métallique est monté sur le module de batterie ; et,
- une paire de barres omnibus comportant une première barre omnibus disposée au-dessus d'une deuxième barre omnibus le long du module de batterie, la paire de barres omnibus étant montée contre le module de batterie.

L'attache peut alors être montée encliquetée sur la première barre omnibus de sorte que :
- la surface plane de la tête est en contact avec la surface de contact plane du support métallique,
- la première barre omnibus est disposée dans le logement de réception, l'attache étant retenue sur la première barre omnibus par les moyens d'arrêt ;
- la deuxième jambe est également disposée le long de la deuxième barre omnibus, de préférence contre la deuxième barre omnibus.

L'invention porte encore sur un véhicule électrique ou hybride électrique comportant un système de recharge tel que décrit ci-dessus.

Avantageusement, dans le véhicule électrique ou hybride électrique, lorsque l'attache est montée encliquetée sur la première barre omnibus, une surface externe de la deuxième jambe extérieure au logement de réception peut être en appui contre un élément de châssis ou de plancher du véhicule électrique ou hybride électrique.

L'invention sera davantage détaillée par la description de modes de réalisation non limitatifs, et sur la base des figures annexées illustrant des variantes de l'invention, dans lesquelles :
- [Fig.1] est une vue montrant en détails une attache de positionnement selon l'invention ;
- [Fig.2] illustre schématiquement un système d'alimentation de véhicule électrique, comportant l'attache de positionnement de la Fig. 1 ainsi qu'un module de batterie, un support en tôle de fixation de câbles et deux barres omnibus.

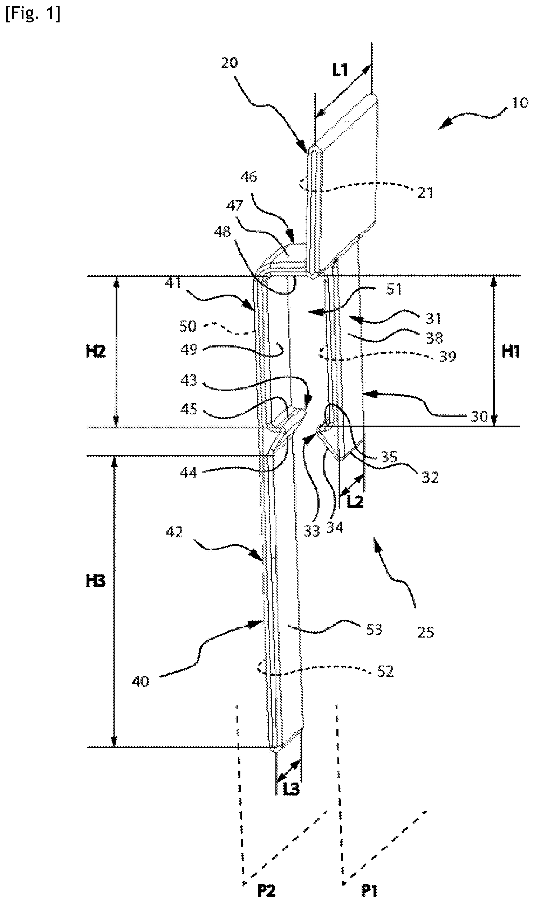

En référence à la Fig. 1, il est décrit une attache 10. Tel qu'illustrée en Fig. 1, l'attache 10 est dans un état de repos, c'est-à-dire non montée dans une structure tierce.

Dans le présent document, l'expression « véhicule électrique » peut désigner aussi bien les véhicules électriques que les véhicules hybrides électriques, c'est-à-dire comportant une première source d'énergie sous forme électrique, et une deuxième source d'énergie, distincte de la première source d'énergie (par exemple et non limitativement, un hydrocarbure de type essence, diesel, bioéthanol, etc.).

En outre, dans ce document, les termes « interne » et « externe » sont à comprendre comme désignant une orientation d'un élément vers un intérieur ou vers un extérieur de l'attache 10.

Enfin, dans ce document, l'expression « sensiblement parallèle » a trait à des faces ou parois s'étendant dans des plans généralement alignés entre eux ou jusqu'à 20° l'un de l'autre.

L'attache 10 comporte une tête 20 et deux jambes 30 et 40. La tête et les deux jambes 30 et 40 sont formées d'un seul tenant.

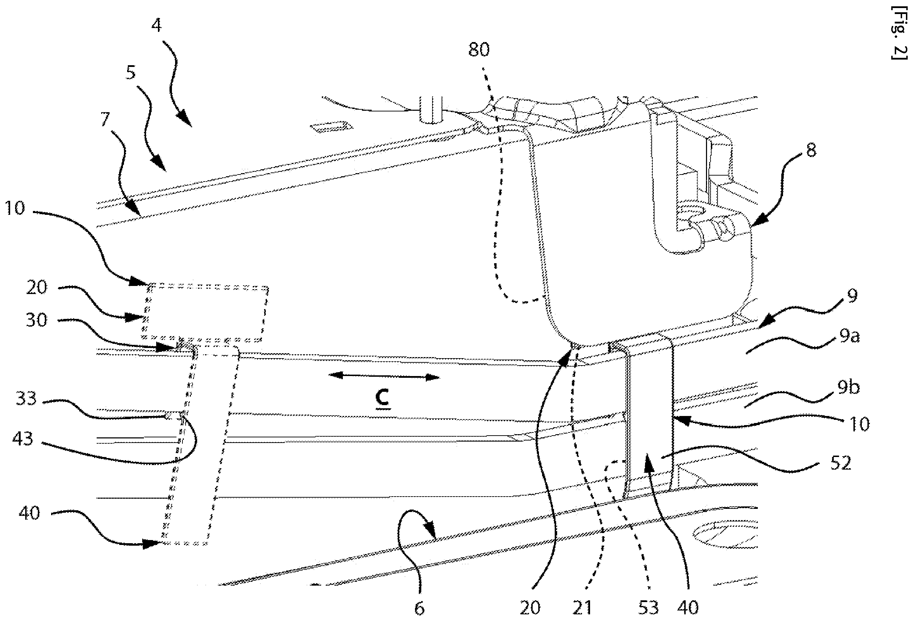

La tête 20 est ici généralement plate. La tête 20 comporte au moins une face plane 21. La face plane 21 est destinée à former une région de contact avec un élément externe, tel que le support métallique 8 décrit plus loin en référence à la Fig. 2. Optionnellement et non limitativement, ainsi qu'illustré, la tête 20 est de forme rectangulaire.

Les jambes 30 et 40 sont chacune de forme allongée. De préférence, ainsi qu'illustré en Fig. 1, les jambes 30 et 40 sont généralement plates.

La première jambe 30 s'étend ici de préférence depuis un côté de la tête 20. Ainsi qu'illustré, mais non limitativement, la première jambe 30 est de préférence disposée dans l'alignement de la tête plate 20 (ainsi que visible en Fig. 1).

La première jambe 30 comporte une section principale 31 s'étendant jusqu'à une extrémité distale 32. La section principale 31 s'étend entre une face interne 38 et une face externe 39. La face interne 38 et la face externe 39 sont de préférence sensiblement planes et/ou sensiblement parallèles entre elles.

La section principale 31 comporte un moyen d'arrêt 33, en saillie par rapport à la face interne 38. Ici, le moyen d'arrêt 33 est également disposé au niveau de l'extrémité distale 32. Dans le mode de réalisation représenté, le moyen d'arrêt 33 est une dent d'encliquetage.

La dent d'encliquetage 33 présente une surface d'insertion 34 et une surface d'arrêt 35. La surface d'insertion 34 est inclinée par rapport au plan général d'extension de la section principale 31. La surface d'insertion 34 est aussi orientée à l'opposé de la tête 20 par rapport à la section principale 31. La surface d'arrêt 35 est orientée sensiblement transversalement à la section principale, et en direction de la tête 20 par rapport à la section principale 31.

La deuxième jambe 40 comporte une section proximale 41 et une section distale 42. Dans le mode de réalisation illustré, la deuxième jambe 40 présente encore une section de jonction 46, optionnelle, reliant la section proximale 41 à l'ensemble 25 formé par la tête 20 et la première jambe 30 (c'est-à-dire à l'un ou l'autre parmi la tête 20 et la première jambe 30, ou encore à une zone de raccordement entre la tête 20 et la première jambe 30).

La section de jonction 46 est ici de forme généralement plane et rectangulaire. La section de jonction 46 est rattachée d'un premier côté à la section principale 31 de la première jambe 30. La section de jonction 46 est rattachée d'un deuxième côté, opposé au premier côté, à la section proximale 41 de la deuxième jambe 40. La section de jonction 46 s'étend ici transversalement, par exemple ici perpendiculairement, d'une part à la première jambe 30 et d'autre part à la section proximale 41 de la deuxième jambe 40. Ainsi, la deuxième jambe 40 est ici en forme de L, la section de jonction 46 en formant la branche courte, tandis que les sections proximale 41 et distale 42 en forment la branche longue.

En variante, la deuxième jambe est exempte de la section de jonction 46, la section proximale 31 étant alors directement reliée à l'ensemble 25, par exemple par une forme locale recourbée de la section proximale 41.

La section de jonction 46 de la jambe 40 permet d'éviter le contact entre la barre omnibus 9a et le support métallique 8 pour protéger la barre omnibus 9a de tout risque d'usure de sa protection électrique.

La section proximale 41 s'étend entre une face interne 49 et une face externe 50. La face interne 49 et la face externe 50 sont de préférence sensiblement planes et/ou sensiblement parallèles entre elles. La section distale 42 s'étend depuis une extrémité de la section proximale 41 opposée à la tête 20. La section proximale 41 est ici définie comme étant plus proche de la tête 20 que la section distale 42.

De préférence, non limitativement, la section principale 31 de la première jambe 30 et la section proximale 41 de la deuxième jambe 40 s'étendent généralement dans un plan d'extension P1 et P2 respectif de manière sensiblement parallèle entre elles. En outre, la section proximale 41 et la section distale 42 s'étendent ici, non limitativement, sensiblement dans un même plan. En variante non illustrée, la section distale 42 peut être légèrement courbée ou inclinée, par exemple en direction de la première jambe 30 et/ou de l'extrémité distale 32 de la première jambe 30.

La deuxième jambe 40 présente un moyen d'arrêt 43. Le moyen d'arrêt 43 est formé à la rencontre entre la section proximale 41 et la section distale 42. Par commodité de description, on considère ici que le moyen d'arrêt 43 appartient à la section proximale 41.

Dans le mode de réalisation représenté, le moyen d'arrêt 43 est une dent d'encliquetage. Ainsi qu'illustré, la dent d'encliquetage 43 peut être, non limitativement, de conformation analogue à la dent d'encliquetage 33.

Ainsi, la dent d'encliquetage 43 présente ici également une surface d'insertion 44 et une surface d'arrêt 45. La surface d'insertion 44 est orientée à l'opposé de la tête 20 par rapport à la section proximale 41. La surface d'arrêt 45 est orientée sensiblement transversalement à la section principale 31, et en direction de la tête 20 par rapport à la section proximale 41.

Comme il ressort de la description ci-dessus, la deuxième jambe 40 est plus longue que la première jambe 30. Plus précisément, dans le mode de réalisation illustré, la longueur H1 de la section principale 31 de la première jambe est sensiblement la même que la longueur H2 que la section proximale 41 de la deuxième jambe 40. L'éventuelle plus courte des longueurs H1 et H2 sera considérée comme étant la longueur du logement de réception 51, les longueurs H1 et H2 étant de préférence égales.

Par ailleurs, le moyen d'arrêt 33 est disposé en regard direct du moyen d'arrêt 43. Le moyen d'arrêt 33 est ainsi saillant en direction de la deuxième jambe 40. Le moyen d'arrêt 43 est saillant en direction de la première jambe 30.

De plus, la face 38 de la première jambe 30 et la face 48 de la deuxième jambe 40 sont en regard l'une de l'autre.

Un logement de réception 51 est ainsi formé entre la face 38 et la face 48. A l'opposé de la tête 20, le logement de réception 51 s'étend jusqu'aux moyens d'arrêt 33 et 43. Comme il sera détaillé plus loin, le logement de réception 51 est prévu pour recevoir une barre omnibus 9a ou 9b d'un système de recharge 5 de véhicule électrique 4.

Une mise en œuvre de l'attache 10 dans un véhicule électrique 4 est décrite ci-après à titre d'exemple.

Le véhicule électrique 4 comporte un système de recharge 5 et un élément de plancher ou de châssis 6.

Le système de recharge 5 comporte un module de batterie 7 (de forme sensiblement parallélépipédique), un support métallique 8 et une paire de conducteurs 9.

Le module de batterie 7, de type connu en lui-même, sert de source d'énergie électrique d'entraînement du véhicule électrique 4.

Le support métallique 8 coiffe un angle du module de batterie 7. Le support métallique a pour rôle tout à la fois de servir de pièce de fixation à divers composants (non illustrés : calculateur électronique et éléments de raccordement de câblage, etc.) du véhicule électrique 4 et de pièce de protection à un angle du module de batterie 7.

Les conducteurs 9 sont les barres omnibus 9a et 9b précitées. Les barres omnibus 9a et 9b forment respectivement un conducteur électrique positif et un conducteur électrique négatif. Les barres omnibus 9a et 9b assurent la connexion électrique entre le module de batterie 7 et les consommateurs électriques du véhicule électrique 4 (moteur(s), équipements, etc. ; non illustrés).

Dans l'exemple illustré et décrit ci-dessus, les barres omnibus 9a et 9b sont chacune de section généralement rectangulaire. L'attache est donc conçue pour que le logement de réception 51 soit dimensionné à correspondance de forme avec la barre omnibus 9a. Avantageusement, l'attache 10 peut s'encliqueter sur la barre omnibus 9a. En outre, une surface interne 53 de la section distale 42 peut venir contre la deuxième barre omnibus 9b pour en assurer la stabilité dans le véhicule 4 après assemblage.

L'attache 10 est ici conçue en plastique chargé de fibres, par exemple de carbone ou de verre. Un tel matériau confère à l'attaché 10 une flexibilité suffisante pour pouvoir s'encliqueter autour de la barre omnibus 9a par écartement des jambes 30 et 40 puis retour vers leur position initiale, tout en assurant une rigidité et un état de surface suffisants pour permettre le coulissement de l'attache 10 selon une direction C suivant la direction d'extension des barres omnibus 9a, 9b et son montage à force entre les barres omnibus 9a, 9b et des éléments tiers tels que le support métallique 8 et l'élément de plancher ou de châssis 6. En outre, ce matériau offre une longévité importante couvrant la durée de vie du véhicule électrique. Enfin, sa texture lisse permet un bon coulissement de l'attache sur les barres omnibus 9a et 9b qui sont métalliques.

On note que la deuxième jambe 40 est plus longue que la dimension verticale de deux barres omnibus (c'est-à-dire haut-bas selon l'orientation normale d'un véhicule). Ainsi, la surface externe 52 de la deuxième jambe 40 est apte à venir en contact avec l'élément de plancher ou de châssis 6 de sorte à pouvoir être montée à force à la fois sur les barres omnibus 9a et 9b et contre l'élément de plancher ou de châssis 6.

On note que l'attache 10 peut être dépourvue de l'un ou l'autre des moyens d'arrêt 33 ou 43 et n'en comporter ainsi qu'un des deux. Préférentiellement, néanmoins, l'attache 10 comporte chacun des moyens d'arrêt 33 et 43 pour une meilleure accroche de l'attache 10 et une meilleure stabilité de l'assemblage lorsque l'attache 10 est montée sur la barre omnibus 9a.

On note que la tête 20 présente une largeur L1 plus importante que la largeur L2 de la première jambe 30 et que la largeur L3 de la deuxième jambe 40. La stabilité de la tête 20 contre le support métallique 8 est donc optimale.

## Revendications

1. Attache (10) pour le positionnement de conducteurs (9a, 9b) d'un système de recharge (5) de véhicule électrique ou hybride électrique (4), comportant :
- une tête (20) présentant au moins une surface plane (21) ;
- une première jambe (30) et une deuxième jambe (40), chacune de forme allongée, la première jambe (30) s'étendant depuis la tête (20), la deuxième jambe (40) étant rattachée à un ensemble (25) formé par la tête (20) et la première jambe (30), la première jambe (30) comportant une première face (39) et la deuxième jambe (40) comportant une deuxième face (49) agencée en regard de la première face (39),
la première jambe (30) comportant un premier moyen d'arrêt (33) saillant en direction de la deuxième jambe (40), et la deuxième jambe (40) comportant un deuxième moyen d'arrêt (43) saillant en direction de la première jambe (30), les moyens d'arrêt (33 ; 43) de la première jambe (30) et de la deuxième jambe (40) étant agencés en regard l'un par rapport à l'autre,
un logement de réception (51) étant formé conjointement par la première jambe (30) et la deuxième jambe (40) entre la première face (39) et la deuxième face (49), et délimité par lesdits moyens d'arrêt (33 ; 43) dans un sens opposé à la tête (20),
une longueur (H3) d'une section distale (42) de la deuxième jambe (40) qui s'étend au-delà du deuxième moyen d'arrêt (43), mesurée depuis le deuxième moyen d'arrêt (43), étant supérieure à une longueur (H1 ; H2) du logement de réception (51) mesurée entre le deuxième moyen d'arrêt (43) et une surface de fond (48) du logement de réception (51) opposée au deuxième moyen d'arrêt (43).

2. Attache (10) selon la revendication 1, **caractérisée en ce que** l'attache (10) est en plastique chargé de fibres, de préférence de carbone ou de verre.

3. Attache (10) selon l'une quelconque parmi les revendications 1 à 2, **caractérisée en ce que** les moyens d'arrêt (33 ; 43) sont chacun en forme de dent à section triangulaire.

4. Attache (10) selon l'une quelconque parmi les revendications 1 à 3, **caractérisée en ce que** la tête (20) et la première jambe (30) sont disposées dans l'alignement l'une de l'autre.

5. Attache (10) selon l'une quelconque parmi les revendications 1 à 4, **caractérisée en ce que** la deuxième jambe (40) est plus longue que la première jambe (30) et/ou **en ce que** le premier moyen d'arrêt (33) est disposé en une extrémité distale (32) de la première jambe (30).

6. Attache (10) selon l'une quelconque parmi les revendications 1 à 5, **caractérisée en ce que** la première jambe (30) et au moins une section proximale (41) de la deuxième jambe (40) portant la deuxième face (49) s'étendent dans un plan d'extension (P1 ; P2) respectif, les plans d'extension (P1 ; P2) étant sensiblement parallèles entre eux.

7. Système de recharge (5) pour véhicule électrique ou hybride électrique (4), **caractérisé en ce qu'**il comporte une attache (10) selon l'une quelconque des revendications 1 à 6 et deux barres métalliques (9a, 9b) destinées à former chacune un conducteur de type barre omnibus, le logement de réception (51) de l'attache (10) étant apte à recevoir l'une des deux barres métalliques (9a, 9b).

8. Système de recharge (5) de véhicule électrique ou hybride électrique (4) selon la revendication 7, **caractérisé en ce que** le système de recharge (5) comporte :
- un module de batterie (7) ;
- un support métallique (8) comportant une surface de contact plane (80) orientée en regard du module de batterie (7) lorsque le support métallique (8) est monté sur le module de batterie (7) ; et,
- une paire de barres omnibus (9a, 9b) comportant une première barre omnibus (9a) disposée au-dessus d'une deuxième barre omnibus (9b) le long du module de batterie (7), la paire de barres omnibus (9a, 9b) étant montée contre le module de batterie (7),
dans lequel l'attache (10) est montée encliquetée sur la première barre omnibus (9a) de sorte que :
- la surface plane (21) de la tête (20) est en contact avec la surface de contact plane (80) du support métallique (8),
- la première barre omnibus (9a) est disposée dans le logement de réception (51), l'attache (10) étant retenue sur la première barre omnibus (9a) par les moyens d'arrêt (33 ; 43),
- la deuxième jambe (40) est également disposée le long de la deuxième barre omnibus (9b), de préférence contre la deuxième barre omnibus (9b).

9. Véhicule électrique ou hybride électrique (4) comportant un système de recharge (5) selon la revendication 7 ou 8.

10. Véhicule électrique ou hybride électrique (4) selon la revendication 9, **caractérisé en ce que**, lorsque l'attache (10) est montée encliquetée sur la première barre omnibus (9a), une surface externe (52) de la deuxième jambe (40) extérieure au logement de réception (51) est en appui contre un élément de châssis ou de plancher (6) du véhicule électrique ou hybride électrique (4).

## Patentansprüche

1. Klammer (10) zur Positionierung von Leitern (9a, 9b) eines Aufladesystems (5) für ein Elektro- oder Hybridfahrzeug (4), mit:
- einem Kopf (20) mit mindestens einer ebenen Oberfläche (21);
- ein erstes Bein (30) und ein zweites Bein (40), die jeweils eine längliche Form haben, wobei sich das erste Bein (30) vom Kopf (20) erstreckt, wobei das zweite Bein (40) an einer Anordnung (25) befestigt ist, die durch den Kopf (20) und das erste Bein (30) gebildet wird, wobei das erste Bein (30) eine erste Fläche (39) und das zweite Bein (40) eine zweite Fläche (49) aufweist, die der ersten Fläche (39) gegenüberliegt,
das erste Bein (30) ein erstes Anschlagmittel (33) aufweist, das in Richtung des zweiten Beins (40) vorsteht, und das zweite Bein (40) ein zweites Anschlagmittel (43) aufweist, das in Richtung des ersten Beins (30) vorsteht, wobei die Anschlagmittel (33; 43) des ersten Beins (30) und des zweiten Beins (40) einander gegenüberliegend angeordnet sind,
eine Aufnahmeaufnahme (51), die gemeinsam durch das erste Bein (30) und das zweite Bein (40) zwischen der ersten Fläche (39) und der zweiten Fläche (49) gebildet ist und durch die Arretiermittel (33; 43) in einer dem Kopf (20) entgegengesetzten Richtung begrenzt ist,
eine Länge (H3) eines distalen Abschnitts (42) des zweiten Beins (40), der sich über das zweite Haltemittel (43) hinaus erstreckt, gemessen von dem zweiten Haltemittel (43), größer ist als eine Länge (H1; H2) des Aufnahmegehäuses (51), gemessen zwischen dem zweiten Haltemittel (43) und einer dem zweiten Haltemittel (43) gegenüberliegenden Bodenfläche (48) des Aufnahmegehäuses (51).

2. Klammer (10) nach Anspruch 1, **dadurch gekennzeichnet, dass** das Befestigungselement (10) aus fasergefülltem Kunststoff, vorzugsweise Kohlenstoff oder Glas, besteht.

3. Klammer (10) nach einem der Ansprüche 1 bis 2, **dadurch gekennzeichnet, dass** die Anschlagmittel (33; 43) jeweils eine Zahnform mit dreieckigem Querschnitt aufweisen.

4. Klammer (10) nach einem der Ansprüche 1 bis 3, **dadurch gekennzeichnet, dass** der Kopf (20) und das erste Bein (30) in einer Flucht zueinander angeordnet sind.

5. Klammer (10) nach einem der Ansprüche 1 bis 4, **dadurch gekennzeichnet, dass** der zweite Schenkel (40) länger als der erste Schenkel (30) ist und/oder dass das erste Anschlagmittel (33) an einem distalen Ende (32) des ersten Schenkels (30) angeordnet ist.

6. Klammer (10) nach einem der Ansprüche 1 bis 5, **dadurch gekennzeichnet, dass** sich der erste Schenkel (30) und mindestens ein proximaler Abschnitt (41) des zweiten Schenkels (40), der die zweite Fläche (49) trägt, in einer jeweiligen Ausdehnungsebene (P1; P2) erstrecken, wobei die Ausdehnungsebenen (P1; P2) im Wesentlichen parallel zueinander sind.

7. Aufladesystem (5) für ein Elektro- oder Hybridfahrzeug (4), **dadurch gekennzeichnet, dass** es eine Klammer (10) nach einem der Ansprüche 1 bis 6 und zwei Metallstäbe (9a, 9b) aufweist, die jeweils einen Stromschienenleiter bilden, wobei die Aufnahmeaufnahme (51) der Klammer (10) zur Aufnahme einer der beiden Metallstäbe (9a, 9b) geeignet ist.

8. Aufladesystem (5) für ein Elektro- oder Hybridfahrzeug (4) nach Anspruch 7, **dadurch gekennzeichnet, dass** das Aufladesystem (5) umfasst:
- ein Batteriemodul (7);
- einem Metallträger (8) mit einer ebenen Kontaktfläche (80), die dem Batteriemodul (7) zugewandt ist, wenn der Metallträger (8) auf dem Batteriemodul (7) montiert ist; und
- ein Paar von Sammelschienen (9a, 9b) mit einer ersten Sammelschiene (9a), die oberhalb einer zweiten Sammelschiene (9b) entlang des Batteriemoduls (7) angeordnet ist, wobei das Paar von Sammelschienen (9a, 9b) an dem Batteriemodul (7) angebracht ist,
bei dem die Klemme (10) mit einem Schnappverschluss an der ersten Sammelschiene (9a) angebracht ist, sodass:
- die ebene Oberfläche (21) des Kopfes (20) die ebene Kontaktfläche (80) des Metallträgers (8) berührt,
- die erste Sammelschiene (9a) in der Aufnahmeaufnahme (51) angeordnet ist, wobei die Halterung (10) durch die Arretiermittel (33; 43) an der ersten Sammelschiene (9a) gehalten wird,
- Das zweite Bein (40) ist ebenfalls entlang der zweiten Sammelschiene (9b), vorzugsweise gegen die zweite Sammelschiene (9b) angeordnet.

9. Elektro- oder Hybrid-Elektrofahrzeug (4) mit einem Aufladesystem (5) nach Anspruch 7 oder 8.

10. Elektro- oder Hybrid-Elektrofahrzeug (4) nach Anspruch 9, **dadurch gekennzeichnet, dass**, wenn die Halterung (10) auf der ersten Sammelschiene (9a) verrastet montiert ist, eine Außenfläche (52) des zweiten Schenkels (40) außerhalb der Aufnahmeaufnahme (51) an einem Rahmen- oder Bodenelement (6) des Elektro- oder Hybrid-Elektrofahrzeugs (4) anliegt.

## Claims

1. Fastener (10) for positioning conductors (9a, 9b) of a charging system (5) of an electric vehicle or electric hybrid vehicle (4), comprising:
- a head (20) having at least one flat surface (21);
- a first leg (30) and a second leg (40), each of elongate shape, the first leg (30) extending from the head (20), the second leg (40) being attached to an assembly (25) formed by the head (20) and the first leg (30), the first leg (30) comprising a first face (39) and the second leg (40) comprising a second face (49) arranged facing the first face (39),
the first leg (30) comprising a first shutdown means (33) projecting in management from the second leg (40), and the second leg (40) comprising a second shutdown means (43) projecting in management from the first leg (30), the shutdown means (33; 43) of the first leg (30) and of the second leg (40) being arranged facing each other by report to each other,
a receipt housing (51) being formed jointly by the first leg (30) and the second leg (40) between the first face (39) and the second face (49), and defined by said shutdown means (33; 43) in a direction opposite the head (20),
a length (H 3) of a distal section (42) of the second leg (40) that extends beyond the second shutdown means (43), measured from the second shutdown means (43), being greater than a length (H 1; H 2) of the receipt housing (51) measured between the second shutdown means (43) and a bottom surface (48) of the receipt housing (51) opposite the second shutdown means (43).

2. Fastener (10) according to claim 1, wherein the fastener (10) is made of plastic loaded of fibres, preferably carbon or glass.

3. Fastener (10) according to any one of Claims 1 to 2, wherein the shutdown means (33; 43) are each in the shape of a tooth with a triangular section.

4. Fastener (10) according to any one of claims 1 to 3, **characterised in that** the head (20) and the first leg (30) are arranged in alignment with each other.

5. Fastener (10) according to any one of claims 1 to 4, wherein the second leg (40) is longer than the first leg (30) and/or wherein the first shutdown means (33) is arranged at a distal end (32) of the first leg (30).

6. Fastener (10) according to any one of Claims 1 to 5, **characterised in that** the first leg (30) and at least one proximal section (41) of the second leg (40) bearing the second face (49) extend in a respective extension drawing (P1; P2), the extension drawings (P1; P2) being substantially parallel to each other.

7. Charging system (5) for an electric or hybrid electric vehicle (4), **characterised in that** it comprises a fastener (10) according to any one of claims 1 to 6 and two metal bars (9a, 9b) each intended to form a conductor of the bus bar type, the receipt housing (51) of the fastener (10) being able to accommodate one of the two metal bars (9a, 9b).

8. Charging system (5) for an electric or hybrid electric vehicle (4) according to claim 7, **characterised in that** the charging system (5) comprises:
- a battery module (7);
- a metal support (8) having a flat contact surface (80) facing the battery module (7) when the metal support (8) is mounted on the battery module (7);
and
pair of bus bars (9 a, 9 b) comprising a first bus bar (9 a) arranged above a second bus bar (9 b) along the battery module (7), the pair of bus bars (9 a, 9 b) being mounted against the battery module (7),
wherein the fastener (10) is snap-fastened to the first bus bar (9 a) so that:
- the planar surface (21) of the head (20) is in contact with the planar contact surface (80) of the metal support (8),
- the first bus bar (9 a) is arranged in the receipt housing (51), the fastener (10) being retained to the first bus bar (9 a) by the shutdown means (33; 43),
- the second leg (40) is also arranged along the second bus bar (9 b), preferably against the second bus bar (9 b).

9. Electric or hybrid electric vehicle (4) comprising a charging system (5) according to Claim 7 or 8.

10. Electric or hybrid electric vehicle (4) according to claim 9, wherein, when the fastener (10) is mounted snap-fastened on the first bus bar (9 a), an outer surface (52) of the second leg (40) outside the receipt housing (51) bears against a chassis or floor element (6) of the electric or hybrid electric vehicle (4).
